# FASCICULE DE BREVET EUROPEEN

(11) **EP 3 077 288 B1**
(45) Date de publication et mention de la délivrance du brevet: **03.01.2018**
(21) Numéro de dépôt: 14821745.8
(22) Date de dépôt: 25.11.2014
(51) Int. Cl.: B64D 29/00

(54) **MAT D'EVACUATION DE FLUIDES DRAINES POUR UN ENSEMBLE PROPULSIF**
ABLAUFMAST FÜR FLÜSSIGKEITEN FÜR EINE ANTRIEBSVORRICHTUNG
FLUIDS DRAINMAST FOR PROPULSOR ASSEMBLY

(30) Priorité: 04.12.2013 FR 1362077
(43) Date de publication de la demande: 12.10.2016
(73) Titulaire: Safran Aircraft Engines, 75015 Paris (FR)
(72) Inventeur: LEON, Alexandre, F-77550 Moissy-Cramayel cedex (FR); PAVILLET, Julien, F-77550 Moissy-Cramayel cedex (FR); SAYN-URPAR, Julien, F-77550 Moissy-Cramayel cedex (FR)
(74) Mandataire: Gevers & Orès
(86) Numéro de dépôt international: PCT/FR2014/053030
(87) Numéro de publication internationale: WO 2015/082800

(56) Documents cités:
- EP-A2- 2 065 303
- WO-A1-2012/116739
- DE-A1-102005 003 436
- FR-A1- 2 757 823
- US-A- 5 062 441
- US-A- 5 285 636

## Description

### DOMAINE TECHNIQUE

La présente invention concerne un mât d'évacuation de fluides drainés pour un ensemble propulsif d'avion comportant notamment un moteur (tel qu'un turboréacteur ou un turbopropulseur) entouré par une nacelle.

### ETAT DE L'ART

Un ensemble propulsif d'avion est en général équipé de moyens de drainage de fluides (huile, eau et/ou carburant) du moteur pour éviter que ces fluides ne s'accumulent et ne perturbent le fonctionnement du moteur. Le drainage de l'huile et du carburant est réalisé du fait des technologies de joints dynamiques (pompes, AGB, doseurs, vérins, etc.) ne permettant pas une étanchéité parfaite. Il faut donc drainer les fluides qui passent à travers les joints dynamiques pour éviter des fuites dans le moteur. L'eau est drainée pour éviter les zones de rétention qui entraînent souvent une corrosion.

Dans la technique actuelle, les fluides drainés peuvent être évacués directement vers l'extérieur. Les moyens de drainage des fluides du moteur peuvent également être reliés par des moyens d'amenée, tels que des conduits, à une boîte de rétention comportant une cavité de stockage des fluides drainés. Cette boîte de rétention est située dans l'ensemble propulsif. Elle est fixée au moteur et est en général située en partie basse de l'ensemble propulsif de façon à ce que les fluides drainés circulent par gravité dans les moyens d'amenée jusque dans la cavité de stockage.

L'ensemble propulsif comprend en outre un mât de drainage pour l'évacuation des fluides drainés vers l'extérieur. Ce mât est porté par la nacelle et fait saillie vers l'extérieur de la nacelle. Il est également situé en partie basse de l'ensemble propulsif, en regard de la boîte de rétention, et récupère des fluides sortant de la boîte. Le mât comprend une extrémité inférieure comportant un orifice d'évacuation des fluides vers l'extérieur de la nacelle. Lorsque la cavité de stockage de la boîte de rétention est vidée, les fluides sont évacués jusqu'à l'ouverture du mât puis sont évacués vers l'extérieur de l'ensemble propulsif.

Cependant, le volume de la boîte de rétention est limité (limitation volontaire du volume pour limiter l'encombrement dans l'environnement moteur). La boîte de rétention ne peut donc pas recueillir indéfiniment les fluides drainés et certains avionneurs exigent de ne pas libérer de fluides lorsque l'avion est au sol et en fonctionnement normal. Une solution consiste donc à purger la boite de rétention lorsque l'avion est en vol, cette purge pouvant être commandée automatiquement par un calculateur moteur (FADEC) ou des conditions de pression particulières dans un système huile ou carburant.

Cependant, cette solution n'est pas entièrement satisfaisante car, en l'absence d'un défaut de commande, la boîte de rétention n'est pas vidée et des fluides risquent d'être évacués de la boîte par son trop-plein lorsque l'avion est au sol.

L'état de l'art comprend également les documents US-A-5 285 636 et US-A-5 062 441.

La présente invention propose une solution simple, efficace et économique à ce problème au moyen d'un système de rétention des fluides drainés d'un ensemble propulsif, qui est équipé d'une purge autonome, c'est-à-dire qui fonctionne sans l'intervention du calculateur moteur ou sans prélèvement de pression sur un système du moteur.

### EXPOSE DE L'INVENTION

L'invention propose à cet effet un mât d'évacuation de fluides drainés pour un ensemble propulsif, ce mât comportant une cavité de stockage des fluides drainés, au moins un orifice d'évacuation des fluides contenus dans la cavité de stockage et un organe de purge de la cavité de stockage, cet organe étant mobile entre une première position de fermeture de l'orifice d'évacuation et une deuxième position de libération de cet orifice, caractérisé en ce qu'il comprend des moyens de prise d'une différence de pression à l'extérieur du mât, l'organe étant configuré pour se déplacer de la première à la deuxième position lorsque ladite différence de pression est supérieure à une valeur prédéterminée.

L'invention est particulièrement avantageuse car elle permet d'utiliser une différence de pression telle que la pression dynamique extérieure et donc la vitesse de l'avion pour déclencher la purge du mât de rétention et d'évacuation des fluides. En effet, la pression dynamique à l'extérieur du mât varie en fonction de la vitesse de l'avion. Lorsque l'avion est à l'arrêt, la pression dynamique est nulle et l'organe est dans sa première position. Plus la vitesse de l'avion augmente et plus la pression dynamique augmente. Le mât est conçu pour que sa purge soit actionnée lorsque la pression dynamique a atteint un certain seuil c'est-à-dire lorsque l'avion a atteint une certaine vitesse en vol (l'organe est alors dans sa deuxième position). Ainsi, la purge du mât est réalisée en vol de façon autonome, ce qui limite le risque de perte de fluides drainés lorsque l'avion est au sol.

Avantageusement, le mât comprend un premier moyen de prise de la pression totale à l'extérieur du mât et un second moyen de prise de la pression statique ou pseudo-statique à l'extérieur du mât. En aéronautique, la pression dynamique s'ajoute à la pression statique pour donner la pression totale. La pression dynamique est égale à la différence entre la pression totale et la pression statique. La différence entre la pression statique et la pression pseudo-statique sera détaillée dans ce qui suit. La pression "pseudo statique" est la pression totale au lieu de dépression maximale autour d'un profil aérodynamique, ce qui correspond à la pression totale minimale, qui est plus faible que la pression statique. Cette dépression augmente avec la vitesse de l'avion.

Selon un mode de réalisation de l'invention, l'organe est mobile en translation dans un évidement du mât et comprend ou porte un élément transversal et séparant deux chambres à l'intérieur de l'évidement, une première chambre étant reliée audit premier moyen de prise et une deuxième chambre étant reliée audit second moyen de prise. La première chambre est ainsi soumise à la pression totale et la deuxième chambre est soumise à la pression statique ou pseudo-statique.

L'organe peut être sollicité dans sa première position par des moyens de rappel élastique. Dans un cas particulier de réalisation de l'invention, la pression dynamique exerce sur l'élément transversal une force qui doit être supérieure à la force de rappel des moyens élastiques pour que l'organe se déplace de sa première à sa deuxième position.

L'organe et son élément peuvent être conçus pour que l'organe soit maintenu dans sa première position de fermeture lorsque la pression différence de pression entre les deux chambres est inférieure à 6kPa (ce qui correspond à une vitesse d'écoulement d'air autour du mât de 80m.s-1 environ) et soit maintenu dans sa deuxième position d'ouverture lorsque la différence de pression entre les deux chambres est supérieure à 12kPa (120m.s-1 environ). Entre ces valeurs, l'organe peut se déplacer de la première à la deuxième position, et inversement.

Les premier et second moyens de prise de pression peuvent chacun comprendre un orifice de passage d'air débouchant à l'extérieur du mât.

Le premier moyen de prise est de préférence relié à la première chambre par un conduit comportant au moins deux parties, dont une est inclinée ou perpendiculaire par rapport à l'autre. Ceci limite le risque que les particules susceptibles de pénétrer dans l'orifice du premier moyen de prise parviennent jusque dans la première cavité et ne perturbent la prise de pression dynamique. Ces particules sont destinées à être piégées dans le conduit.

Le mât selon l'invention a de préférence un profil aérodynamique tel qu'un profil NACA du type symétrique biconvexe.

Le profil NACA accélère très localement le fluide, ce qui génère une dépression locale. De même, le profil NACA ralentit le fluide très localement sur la surface d'arrêt, ce qui génère une surpression locale. La différence de pression entre le point de pression minimale et le point de pression maximale sur le profil devient donc supérieure à la pression dynamique. Par exemple, dans le cas d'un profil NACA0018 théorique, cette différence de pression peut être calculée comme étant supérieure ou égale à 1,6 fois la pression dynamique. Cette différence de pression sert à commander le mécanisme d'ouverture par le biais de surfaces d'application. Ceci présente l'intérêt d'augmenter la pression de commande disponible, et donc de gagner en compacité pour un même effort résultant.

Le premier moyen de prise peut être situé sur un bord d'attaque du profil, où l'on trouve la pression totale maximale, égale à la somme de la pression statique et de la pression dynamique. Le second moyen de prise peut être situé sur un côté du profil. Le second moyen de prise est avantageusement situé dans une zone du profil où le coefficient de pression Cp a une valeur sensiblement maximale où la dépression est maximale, donc la pression prélevée est minimale. La pression prise à ce niveau est alors appelée pression pseudo-statique. La pression pseudo-statique peut ainsi être considérée comme étant la pression sur la zone du profil où la dépression est maximale, et donc la pression totale est minimale.

La présente invention concerne également un ensemble propulsif, caractérisé en ce qu'il comprend un mât tel que décrit ci-dessus.

De préférence, le mât a une orientation sensiblement radiale par rapport à l'axe longitudinal de l'ensemble propulsif et est au moins en partie en saillie sur une surface extérieure de la nacelle de l'ensemble propulsif. Les moyens de prise peuvent être situés au voisinage de l'extrémité radialement externe du mât.

La présente invention concerne également un procédé de conception d'un mât tel que décrit ci-dessus, caractérisé en ce qu'il comprend les étapes consistant à :
- déterminer un profil aérodynamique du mât, tel qu'un profil NACA du type symétrique biconvexe,
- positionner un premier moyen de prise d'une pression maximale sur le bord d'attaque du profil,
- déterminer par calcul la distribution du coefficient de pression Cp le long du profil et en déduire la zone du profil où ce coefficient a une valeur sensiblement maximale, et
- positionner un second moyen de prise d'une pression minimale dans ladite zone.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en perspective d' un ensemble propulsif d'avion selon l'invention ;
- la figure 2 est une vue schématique partielle en perspective et en coupe axiale de l'ensemble propulsif de la figure 1, à plus grande échelle ;
- les figures 3 et 4 sont des vues schématiques en perspective d'un mât d'évacuation selon l'invention ;
- la figure 5 est une vue schématique en coupe axiale du mât d'évacuation des figures 3 et 4 ;
- les figures 6 et 7 sont des vues très schématiques en coupe axiale d'un mât d'évacuation selon l'invention, et illustrent deux positions différentes de son organe de purge ; et
- la figure 8 est un graphe représentant l'évolution du coefficient de pression Cp le long d'un mât d'évacuation ayant un profil NACA reproduit sous le graphe, un Cp positif correspondant à une zone de dépression et un Cp négatif correspondant à une surpression.

### DESCRIPTION DETAILLEE

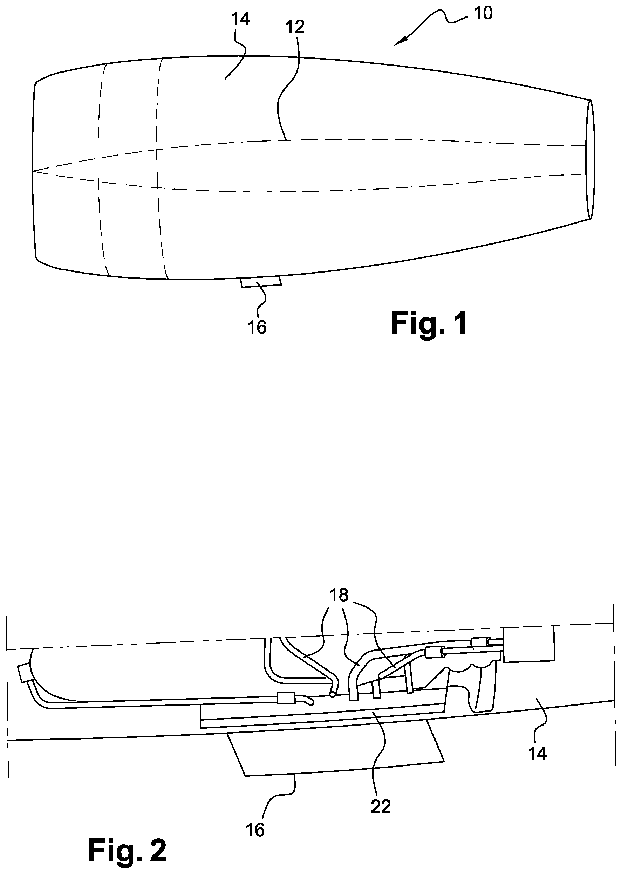

On se réfère d'abord à la figure 1 qui représente un ensemble propulsif 10 d'avion comportant un moteur 12 (tel qu'un turboréacteur à double flux, schématiquement représenté par des traits pointillés) monté à l'intérieur d'une nacelle 14.

La moteur 12 comprend d'amont en aval, dans le sens d'écoulement des gaz (de gauche à droite sur le dessin), une entrée d'air, une soufflante, au moins un compresseur, une chambre de combustion, au moins une turbine et une tuyère d'éjection des gaz de combustion. La nacelle 14 comprend des capots qui définissent la surface extérieure de l'ensemble propulsif.

La turbomachine 10 comprend un mât 16 d'évacuation de fluides drainés, ce mât a une orientation sensiblement radiale (par rapport à l'axe longitudinal de l'ensemble propulsif) et est en saillie sur la surface externe de la nacelle 14. Il est situé en partie basse de l'ensemble propulsif, à 6h (six heures) par analogie avec le cadran d'une horloge.

Plusieurs types de fluides circulent dans la turbomachine 10 et en particulier du carburant pour l'alimentation de la chambre et la combustion des gaz, de l'huile pour la lubrification des paliers des pièces tournantes, et de l'eau qui peut être aspirée par les écopes de ventilation ou formée par la condensation sur le moteur.

En fonctionnement, ces fluides sont drainés pour éviter qu'ils ne s'accumulent et ne perturbent le fonctionnement de l'ensemble propulsif. La turbomachine comprend des moyens de drainage de ces fluides (tels que des drains) qui sont reliés par des moyens d'amenée de fluides tels que des conduits 18 à une boîte de rétention de ces fluides, qui est ici intégrée au mât d'évacuation.

Le mât d'évacuation 16, mieux visible aux figures 2 à 4, comporte à son extrémité radialement externe une platine 22 de fixation à la nacelle 14.

La platine 22 a une forme sensiblement parallélépipédique et est fixée à des capots de la nacelle 14. Elle comprend des orifices 24 alignés avec des orifices 26 de la nacelle pour le passage de moyens du type vis-écrou. Le mât 16 a un profil aérodynamique et traverse une ouverture radiale 28 de la nacelle. Le mât 16 est monté dans cette ouverture par translation radiale vers l'extérieur, depuis l'intérieur de la nacelle, jusqu'à ce que la platine 22 prenne appui sur la surface interne de la nacelle. Un joint d'étanchéité peut être prévu et destiné à être comprimé entre la platine et la nacelle.

Le mât 16 comporte en outre une cavité interne 30 de stockage des fluides drainés.

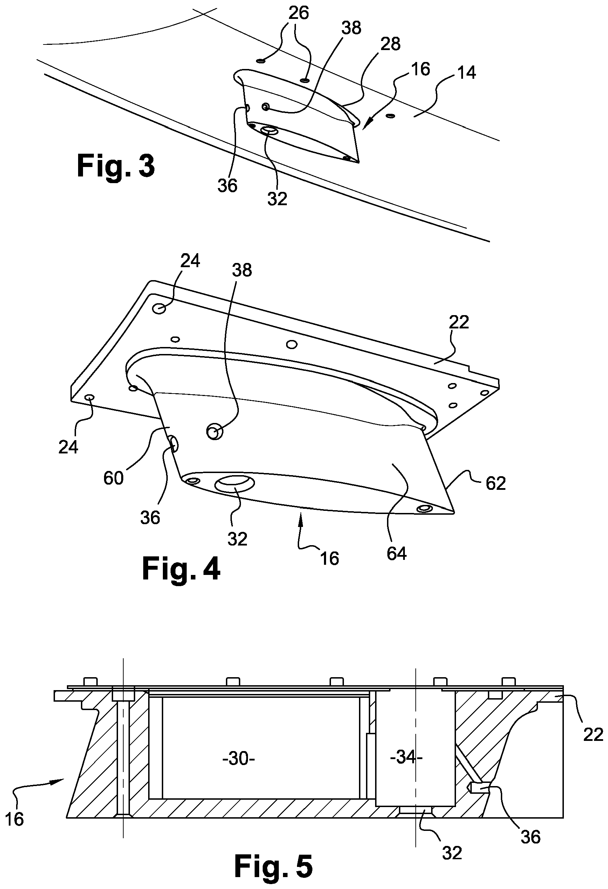

La platine 22 du mât 16 comprend des moyens de raccordement des sorties des conduits 18 d'amenée des fluides drainés à la cavité 30. Ces moyens de raccordement comprennent des canaux dans lesquels sont emboîtées les sorties des conduits 18, les extrémités radialement externes de ces canaux débouchant sur la surface radialement externe de la platine 22, et leurs extrémité radialement internes débouchent dans la cavité 30 (figure 5).

La cavité 30 peut être mise en communication fluidique avec un orifice 32 d'évacuation des fluides contenus dans cette cavité, en vue de la purge de cette dernière.

Selon l'invention, la purge de la cavité 30 est réalisée de manière autonome au moyen d'un organe mobile dont l'actionnement est fonction de la pression dynamique à l'extérieur du mât, et donc de la vitesse de l'avion équipée de l'ensemble propulsif.

La cavité 30 comprend un évidement 34 de logement de l'organe, qui est mobile entre une première position de fermeture de l'orifice 32 et une deuxième position de libération de cet orifice.

Le mât 16 comprend des moyens 36, 38 de prise de la pression dynamique à l'extérieur du mât, l'organe étant destiné à se déplacer depuis la première jusqu'à la deuxième position lorsque la pression dynamique est supérieure ou égale à une valeur prédéterminée.

Dans tout écoulement fluide, une différence de pression se crée entre la pression d'arrêt et la pression statique dès lors que le fluide est en mouvement. Cette différence de pression est ici appliquée sur une surface de l'organe pour générer un effort suffisant pour actionner la purge du mât dès que la vitesse de l'avion dépasse un seuil donné.

La pression dynamique est égale à la différence entre la pression totale et la pression statique. Les moyens de prise de la différence de pression comprennent un premier moyen 36 de prise de la pression totale et un second moyen 38 de prise de la pression statique (ici pseudo-statique).

Ces moyens 36, 38 de prise comprennent ici des orifices ou conduits débouchant sur la surface externe du mât 16. Dans l'exemple de réalisation de la figure 5, le moyen de prise 36 comprend un conduit comportant une première partie dont une extrémité débouche sur la surface externe du mât 16, cette première partie étant reliée à une autre partie du conduit qui est inclinée par rapport à la première partie.

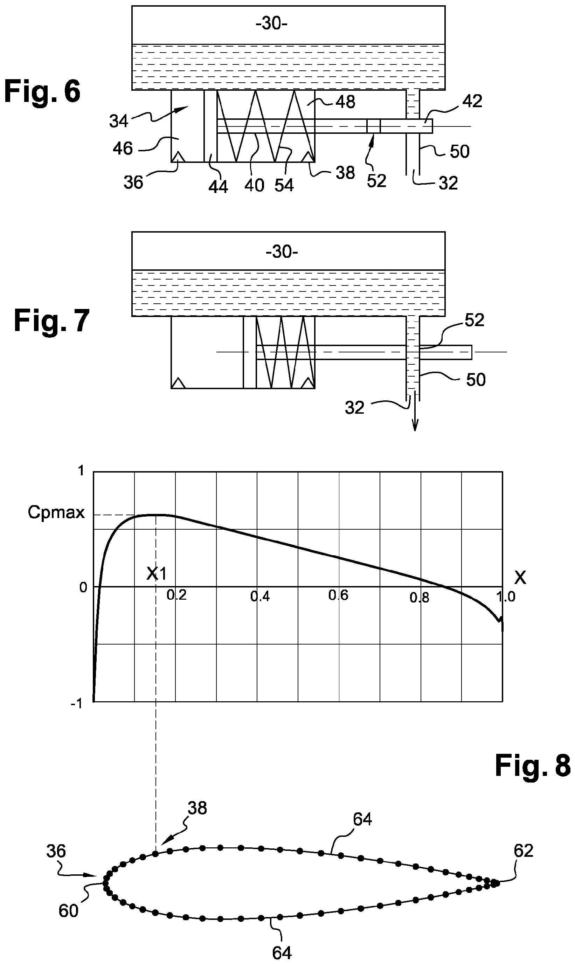

Les figures 6 et 7 montrent de manière très schématique le fonctionnement de l'organe mobile, référencé 40.

L'organe 40 se présente ici sous la forme d'un piston mobile dans l'évidement 34 précité, le piston comportant une tige 42 reliée par une extrémité à un élément transversal tel qu'un disque 44. Le disque 44 sépare l'évidement en deux chambres 46, 48 adjacentes. Le premier moyen de prise 36 met en communication fluidique la première chambre 46 avec l'extérieur du mât, et le second moyen de prise 38 met en communication fluidique la deuxième chambre 48 avec l'extérieur du mât. Les première et deuxième chambres 46 sont ainsi soumises aux pressions totale et pseudo-statique, respectivement.

La tige 42, en se déplaçant, libère un passage pour drainer les fluides. A titre d'exemple, la tige 42 de l'organe 40 traverse un conduit 50 de liaison de la cavité 30 à l'orifice d'évacuation 32, et comprend une lumière 52 traversante qui doit être positionnée au niveau de ce conduit pour que les fluides contenues dans la cavité puisse s'écouler jusqu'à l'orifice 32 et être évacués.

Dans la première position de l'organe 40 représentée en figure 6, sa tige 42 obture le conduit 50 et empêche ainsi la purge de la cavité 30. Dans la deuxième position de l'organe 40 représentée en figure 7, la lumière 52 de la tige 42 laisse passer les fluides contenus dans la cavité 30 jusqu'à leur évacuation par l'orifice 32.

Des moyens élastiques de rappel 54 sont montés dans l'évidement et sollicitent l'organe 40 dans sa première position. Ces moyens 54 prennent ici appui sur le disque 44 de l'organe.

La pression dynamique P_{d} a pour expression P_{d} = ρ*v² /2, dans laquelle :
- p est la masse volumique de l'air, qui diminue à mesure que l'altitude augmente ; ainsi, en haute altitude, la purge de la cavité 30 interviendra pour une vitesse plus importante qu'en basse altitude ;
- v est la vitesse de l'avion ;

Cette pression dynamique est égale à la différence entre la pression totale et la pression statique, P_{d} = Pₜ - Pₛ.

La force F_{d} qu'exerce la pression dynamique sur l'organe 40, et en particulier sur son disque 44, a pour équation F_{d} = S*ρ*v² /2 dans laquelle D est la surface d'application de la pression, qui est ici la surface du disque 44.

La force F_{d} représente la résistance à choisir pour la purge et est dimensionner en fonction du seuil de vitesse à partir duquel la purge est destinée à intervenir, le but étant que la purge intervienne lorsque l'avion atteint une vitesse donnée, par exemple lorsqu'il s'envole.

Selon un mode préféré de réalisation de l'invention, le mât 16 a un profil aérodynamique du type NACA, comme cela est visible aux figures 3 et 4 et au bas de la figure 8 qui montre une section transversale du mât. Le profil de ce mât est ici symétrique et biconvexe, et comprend un bord 60 d'attaque et un bord 62 de fuite de l'air, et des côtés 64 profilés convexes.

Selon l'invention et comme cela est visible aux figures 3 à 5, le premier moyen de prise 36 de la pression totale est situé sur le bord d'attaque 60 du mât, au voisinage de son extrémité radialement externe pour être à distance de la couche limite sur la surface externe de la nacelle 14. Le second moyen de prise 38 de la pression statique est situé sur un côté 64 du mât, également au voisinage de son extrémité radialement externe.

De préférence, le second moyen 38 est utilisé pour la prise d'une pression pseudo-statique, cette pression pseudo-statique étant la pression dans une zone du profil où la dépression est maximale, c'est-à-dire où le coefficient de pression Cp a une valeur maximale Cpmax.

Pour déterminer cette zone et donc la position du second moyen 38, il est donc nécessaire de connaître la distribution de ce coefficient Cp le long du profil du mât. Ceci peut être réalisé par calcul afin d'obtenir une courbe telle que représentée dans la partie supérieure de la figure 8. Le second moyen de prise 38 est positionné à une abscisse X1 correspondant à l'abscisse pour lequel le coefficient de pression a une valeur maximale Cpmax.

## Revendications

1. Mât (16) d'évacuation de fluides drainés pour un ensemble propulsif (10), ce mât comportant une cavité (30) de stockage des fluides drainés, au moins un orifice (32) d'évacuation des fluides contenus dans la cavité de stockage et un organe (40) de purge de la cavité de stockage, cet organe étant mobile entre une première position de fermeture de l'orifice d'évacuation et une deuxième position de libération de cet orifice, **caractérisé en ce qu'**il comprend des moyens (36, 38) de prise d'une différence de pression à l'extérieur du mât, l'organe étant configuré pour se déplacer de la première à la deuxième position lorsque ladite différence de pression est supérieure ou égale à une valeur prédéterminée.

2. Mât (16) selon la revendication 1, **caractérisé en ce qu'**il comprend un premier moyen (36) de prise de la pression totale à l'extérieur du mât et un second moyen (38) de prise de la pression statique ou pseudo-statique à l'extérieur du mât.

3. Mât (16) selon la revendication 2, **caractérisé en ce que** l'organe (40) est mobile en translation dans un évidement (34) du mât et comprend ou porte un élément transversal (44) séparant deux chambres (46, 48) à l'intérieur de l'évidement, une première chambre étant reliée audit premier moyen de prise (36) et une deuxième chambre étant reliée audit second moyen de prise (38).

4. Mât (16) selon la revendication 3, caractérisé le premier moyen de prise (36) est relié à l'une des chambres (46) par un conduit comportant deux parties, dont une est inclinée ou perpendiculaire par rapport à l'autre.

5. Mât (16) selon l'une des revendications précédentes, **caractérisée en ce qu'**il a un profil aérodynamique tel qu'un profil NACA du type symétrique biconvexe.

6. Mât (16) selon la revendication 5 en dépendance de la revendication 2, caractérisé le premier moyen de prise (36) est situé sur un bord d'attaque (60) du profil et le second moyen de prise (38) est situé sur un côté (64) du profil.

7. Mât (16) selon la revendication 6, caractérisé le second moyen de prise (38) est situé dans une zone du profil où le coefficient de pression Cp a une valeur sensiblement maximale.

8. Ensemble propulsif (10), **caractérisé en ce qu'**il comprend un mât (16) selon l'une des revendications précédentes.

9. Ensemble propulsif (10) selon la revendication 8, **caractérisé en ce que** le mât (16) a une orientation sensiblement radiale par rapport à l'axe longitudinal de l'ensemble propulsif et est au moins en partie en saillie sur une surface extérieure de la nacelle (14) de l'ensemble propulsif, les moyens de prise (36, 38) étant situés au voisinage de l'extrémité radialement externe du mât.

10. Procédé de conception d'un mât (16) selon l'une des revendications 1 à 7, **caractérisé en ce qu'**il comprend les étapes consistant à :
- déterminer un profil aérodynamique du mât, tel qu'un profil NACA du type symétrique biconvexe,
- positionner un premier moyen (36) de prise d'une pression maximale sur le bord d'attaque (60) du profil,
- déterminer par calcul la distribution du coefficient de pression Cp le long du profil et en déduire la zone du profil où ce coefficient a une valeur sensiblement maximale, et
- positionner un second moyen (38) de prise d'une pression minimale dans ladite zone.

## Patentansprüche

1. Mast (16) zum Ableiten von drainierten Flüssigkeiten für eine Antriebseinheit (10), wobei dieser Mast einen Hohlraum (30) zum Speichern der drainierten Flüssigkeiten, mindestens eine Öffnung (32) zum Ablassen der Flüssigkeiten, die in dem Hohlraum zum Speichern enthalten sind, und ein Organ (40) zum Entlüften des Hohlraums zum Speichern aufweist, wobei dieses Organ zwischen einer ersten geschlossenen Position der Öffnung zum Ablassen und einer zweiten Position der Freigabe dieser Öffnung beweglich ist, **dadurch gekennzeichnet, dass** er Mittel (36, 38) zum Messen von einer Druckdifferenz auf der Außenseite des Mastes aufweist, wobei das Element konfiguriert ist, um von der ersten in die zweite Position bewegt zu werden, wenn die Druckdifferenz größer als oder gleich einem vorbestimmten Wert ist.

2. Mast (16) nach Anspruch 1, **dadurch gekennzeichnet, dass** er ein erstes Mittel (36) zum Messen des Gesamtdrucks auf der Außenseite des Mastes und ein zweites Mittel (38) zum Messen des statischen oder pseudostatischen Drucks auf der Außenseite des Mastes aufweist.

3. Mast (16) nach Anspruch 2, **dadurch gekennzeichnet, dass** das Organ (40) in einer Ausnehmung (34) des Mastes translatorisch beweglich ist und ein Querelement (44) aufweist oder trägt, das zwei Kammern (46, 48) im Inneren der Ausnehmung trennt, wobei eine erste Kammer mit dem ersten Mittel zum Messen (36) verbunden ist und eine zweite Kammer mit dem zweiten Mittel zum Messen (38) verbunden ist.

4. Mast (16) nach Anspruch 3, **dadurch gekennzeichnet, dass** das Mittel zum Messen (36) mit einer der Kammern (46) durch eine Leitung verbunden ist, die zwei Teile aufweist, wovon eines geneigt oder senkrecht zu dem anderen ist.

5. Mast (16) nach einem der vorhergehenden Ansprüche, **dadurch gekennzeichnet, dass** er ein aerodynamisches Profil wie ein NACA-Profil des Typs des symmetrischen bikonvexen Profils aufweist.

6. Mast (16) nach Anspruch 5 in Abhängigkeit von Anspruch 2, **dadurch gekennzeichnet, dass** das erste Mittel zum Messen (36) an einer Angriffskante (60) des Profils angeordnet ist und das zweite Mittel (38) auf einer Seite (64) des Profils angeordnet ist.

7. Mast (16) nach Anspruch 6, **dadurch gekennzeichnet, dass** das zweite Mittel zum Messen (38) in einem Bereich des Profils angeordnet ist, wo der Druckkoeffizient Cp einen im Wesentlichen maximalen Wert aufweist.

8. Antriebseinheit (10), **dadurch gekennzeichnet, dass** sie einen Mast (16) nach einem der vorhergehenden Ansprüche aufweist.

9. Antriebseinheit (10) nach Anspruch 8, **dadurch gekennzeichnet, dass** der Mast (16) eine Ausrichtung aufweist, die im Wesentlichen radial in Bezug auf die Längsachse der Antriebseinheit ist und mindestens teilweise über eine Außenfläche der Gondel (14) der Antriebseinheit hinausragt, wobei die Mittel zum Messen (36, 38) in der Nähe des radial äußeren Endes des Mastes angeordnet sind.

10. Verfahren zum Entwerfen eines Mastes (16) nach einem der Ansprüche 1 bis 7, **dadurch gekennzeichnet, dass** es Schritte aufweist, die darin bestehen:
- ein aerodynamisches Profil des Mastes wie ein NACA-Profil des Typs des symmetrischen bikonvexen Profils zu bestimmen,
- ein erstes Mittel (36) zum Messen eines maximalen Drucks an der Angriffskante (60) des Profils zu positionieren,
- durch Berechnung die Verteilung des Druckkoeffizienten Cp entlang des Profils zu bestimmen und daraus den Bereich des Profils abzuleiten, wo der Druckkoeffizient einen im Wesentlichen maximalen Wert aufweist, und
- ein zweites Mittel (38) zum Messen eines minimalen Drucks in dem Bereich zu positionieren.

## Claims

1. Stub (16) for discharging drained fluids for a propulsion unit (10), this stub comprising a cavity (30) for storing the drained fluids, and at least one orifice (32) for discharging the fluids contained in the storage cavity and a member (40) for draining the storage cavity, this member being able to move between a first position of closing the discharge orifice and a second position of releasing this orifice, **characterised in that** it comprises means (36, 38) for measuring a difference in pressure outside the stub, the member being configured so as to move from the first to the second position when said difference in pressure is greater than, or equal to, a predetermined value.

2. Stub (16) according to claim 1, **characterised in that** it comprises a first means (36) for measuring the total pressure outside the stub and a second means (38) for measuring the static or pseudo-static pressure outside the stub.

3. Stub (16) according to claim 2, **characterised in that** the member (40) is able to move in translation in a recess (34) in the stub and comprises or carries a transverse element (44) separating two chambers (46, 48) inside the recess, a first chamber being connected to the first measuring means (36) and a second chamber being connected to the second measuring means (38).

4. Stub (16) according to claim 3, **characterised in that** the first measuring means (36) is connected to one of the chambers (46) by a duct comprising two parts, one of which is inclined or perpendicular with respect to the other.

5. Stub (16) according to any of the preceding claims, **characterised in that** it has an aerodynamic profile such as an NACA profile of the biconvex symmetrical type.

6. Stub (16) according to claim 5 dependent on claim 2, **characterised in that** the first measuring means (36) is situated on a leading edge (60) of the profile and the second measuring means (38) is situated on a side (64) of the profile.

7. Stub (16) according to claim 6, **characterised in that** the second measuring means (38) is situated in a region of the profile where the pressure coefficient Cp has a substantially maximum value.

8. Propulsion unit (10), **characterised in that** it comprises a stub (16) according to any of the preceding claims.

9. Propulsion unit (10) according to claim 8, **characterised in that** the stub (16) has a substantially radial orientation with respect to the longitudinal axis of the propulsion unit and at least partly projects on an external surface of the nacelle (14) of the propulsion unit, the measuring means (36, 38) being situated in the vicinity of the radially external end of the stub.

10. Method for designing a stub (16) according to any of claims 1 to 7, **characterised in that** it comprises the steps consisting of:
- determining an aerodynamic profile of the stub, such as an NACA profile of the biconvex symmetrical type,
- positioning a first means (36) for measuring a maximum pressure on the leading edge (60) of the profile,
- determining by calculation the distribution of the pressure coefficient Cp along the profile and deducing therefrom the region of the profile where this coefficient has a substantially maximum value, and
- positioning a second means (38) for measuring a minimum pressure in said region.
